# EUROPEAN PATENT APPLICATION

(11) **EP 3 748 564 A1**
(43) Date of publication of application: **09.12.2020**
(21) Application number: 18903414.3
(22) Date of filing: 27.12.2018
(51) Int. Cl.: G06Q 30/02

(54) **OFFLINE INTERACTIVE ADVERTISEMENT SYSTEM**

(30) Priority: 30.01.2018 CN 201810089984
(71) Applicant: Malogic Holdings Limited, Shenzhen, Guangdong 518052 (CN)
(72) Inventor: HUANG, Pinghua, Shanghai 200032 (CN)
(74) Representative: Grünecker Patent- und Rechtsanwälte PartG mbB
(86) International application number: PCT/CN2018/124464
(87) International publication number: WO 2019/149005

(57) **Abstract**

The present invention relates to an offline interactive advertising system which comprises a data fusion module, a labeling module, a database, an advertising index matching module and an offline advertising management platform all located in a back-end, as well as an identity recognition device and an advertising display screen both located in a front-end. Through collaborative work of several module components set up in the back-end and equipments in the front-end, the system enables consumers to be identified after they arrive at the shopping mall/convenience store. The system pushes offline advertisements based on the matching results between the consumer's identity information and data in the advertisement index database, so that targeted and appropriate interactive advertisements can be pushed in time. Therefore, interaction with consumers has been implemented to enhance the effect of offline advertising investment.

## Description

### Technical field

The invention relates to a technical field of computer data processing, in particular to an offline interactive advertising system.

### Background of the invention

It is well known that, in the post-industrial era when supply exceeds demand, advertising is lifeblood of business operations. Nowadays, due to the rapid progress of technology, the rapid development of Internet technology has promoted the development of the all-media advertising industry. In particular, online advertising, including search engine promotion, website promotion, and forum promotion, is an advertising activity that uses the Internet as a carrier. With the rapid development of technologies such as big data analysis and artificial intelligence, the content of online advertising has become more colorful, at the same time, online advertising can dig out real needs of consumers based on consumer preferences, personalities, consumption behaviors and other information, so as to place advertisements in a timely, interactive, and precise manner to solve the marketing problems of enterprises and reduce advertising costs. And in online advertising, programmatic advertising has begun to play an increasingly important role. Programmatic advertising enables advertisers to purchase the advertisement only by determining approximate delivery requirements, and enables advertisers to accurately contact target consumer groups, which is extremely efficient.

However, traditional offline advertising that still occupies a large proportion in advertising and marketing, such as display advertising in shopping malls/convenience stores, below-the-line advertising, outdoor advertising, etc., is mostly one-way in its broadcasting and promotion. In other words, when offline advertising faces consumers, the identity of consumers will not be discerned, and consumer preferences, behaviors, and other information cannot be obtained in time, so it is difficult to achieve interaction with consumers. Therefore, the current offline advertising cannot achieve timely precision marketing, and delivery effect is still very low. How to combine multiple channels of online and offline advertising to effectively improve the interaction between offline advertising and consumers in order to improve the effect of offline advertising is a problem that needs to be solved.

### Summary of the invention

Aiming at problems that traditional offline advertising cannot identify consumers' identities and cannot interact with consumers based on their preferences and behaviors, the present invention provides an offline interactive advertising system. Through collaborative work of several module components set up in a back-end and equipments in a front-end, the system enables consumers to be identified after they arrive at the shopping mall/convenience store. The system pushes offline advertisements based on matching results between the consumer's identity information and the data in the advertisement index database, so that targeted and suitable interactive advertisements can be pushed in time. Therefore, interaction with consumers has been implemented to enhance the effect of offline advertising investment.

The technical solution of the present invention is as follows:
An offline interactive advertising system, wherein it comprises a data fusion module, a labeling module, a database, an advertising index matching module and an offline advertising management platform all located in a back-end, as well as an identity recognition device and an advertising display screen all located in a front-end, the database comprises a fusion database and an advertising index database;
the data fusion module performs data fusion on several data sources of online data and/or offline data of each consumer and puts fused data into the fusion database, the labeling module attaches several corresponding labels to the fused data according to consumer behavior habits to generate consumer label data and put it into the advertising index database, the identity recognition device performs identity recognition on the consumer who arrives at scene, and then sends identified identity information of the consumer to the advertising index matching module, the advertising index matching module matches the identified identity information of the consumer with data in the advertising index database, according to matching result, the offline advertising management platform pushes corresponding advertisement and displays it on the advertisement display screen.

Further, the identity recognition device comprises a face recognition camera, and the data sources fused by the data fusion module comprises customer information data in a CRM system; the face recognition camera uses face recognition technology to capture the consumer's face and perform recognition analysis on facial features, and sends recognized facial feature information of the consumer to the advertising index matching module, the advertising index matching module matches the recognized facial feature information of the consumer with data in the advertising index database.

Further, the identity recognition device comprises a behavior detection device, and the behavior detection device comprises a Wifi probe set on site, the Wifi probe detects MAC address information of a smart device carried by the consumer to identify the consumer's identity information and sends the identity information to the advertising index matching module for data matching.

Further, the identity recognition device comprises a face recognition camera and a behavior detection device, the behavior detection device comprises a Wifi probe set on site, and the data sources fused by the data fusion module comprises customer information data in a CRM system; the face recognition camera uses face recognition technology to capture the consumer's face and perform recognition analysis on facial features to obtain recognized facial feature information of the consumer, the Wifi probe detects MAC address information of a smart device carried by the consumer, the recognized facial feature information of the consumer and the MAC address information of the smart device carried by the consumer are both sent to the advertising index matching module as the identity information of the consumer for data matching.

Further, the advertising index matching module controls the offline advertising management platform to send precision advertisements when the matching is successful, and controls the offline advertising management platform to send semi-precision advertisements when the matching is unsuccessful.

Further, the face recognition camera remotely captures and tracks the consumer's movement pattern, and performs visual analysis on features other than the consumer's face, and sends the visual analysis result to the CRM system to update the customer information data, thereby updating the data sources.

Further, the behavior detection device also comprises a radio frequency identification device set on site, the database also comprises a temporary database, the data sources fused by the data fusion module comprises customer information data in a CRM system; the radio frequency identification device detects the consumer's movement pattern to recognize the consumer's behavior characteristics, and attaches corresponding labels to recognized consumer's behavior characteristic information, and then puts it into the temporary database, the advertising index matching module first matches the identified consumer's identity information with data in the advertising index database, and when the matching is unsuccessful, matches the identified consumer's identity information with data in the temporary database; the consumer's identity information identified by the identity recognition device and the consumer's behavior characteristic information with labels in the temporary database are both sent to the CRM system to update the customer information data for updating the data sources.

Further, the behavior detection device comprises a normal camera set on site, the data sources fused by the data fusion module comprises customer information data in the CRM system; the normal camera remotely captures and tracks the consumer's movement pattern, and performs visual analysis on the consumer's physical characteristics, and sends the visual analysis result to the CRM system to update the customer information data, thereby updating the data sources.

Further, the face recognition camera is installed on the advertising display screen or at a cash register on site to capture the consumer's face from the front.

Further, the online data of consumers in the data sources comprises online advertisement viewing data, online purchase data, and online customer information data in the CRM system; the offline data of the consumers comprises GPS offline data, on-site transaction data, and offline customer information data in the CRM system.

The technical effects of the present invention are as follows:
The present invention relates to an offline interactive advertising system which comprises a data fusion module, a labeling module, a database, an advertising index matching module and an offline advertising management platform all located in the back-end, as well as an identity recognition device and an advertising display screen all located in the front-end. The database comprises a fusion database and an advertising index database. The data fusion module performs data fusion on several data sources of online data and/or offline data of each consumer and puts the fused data into the fusion database. The labeling module attaches several corresponding labels to the fused data according to consumer behavior habits to generate consumer label data and put it into the advertising index database for advertisers to choose. The identity recognition device performs identity recognition on the consumer who arrives at the scene, and then sends the identified identity information of the consumer to the advertising index matching module. The advertising index matching module matches the identified identity information of the consumer with the data in the advertising index database. According to the matching result, the offline advertising management platform pushes the corresponding advertisement and displays it on the advertisement display screen. The collaborative work of several back-end modules and front-end devices enables the entire system to integrate offline and online data and resources, so as to realize the linkage of several online and offline data sources, so that after consumers arrive at the store/convenience store site, their identity information can be identified by the identity recognition device. In addition, by pushing targeted advertisements for various consumers after matching with the label data of individual consumers in the advertising index database, the push of offline advertisements according to consumers' preferences and habits could be realized, and the one-way disadvantage of offline advertisements in shopping malls/convenience stores could be completely overcome. Consumers can be identified in time. Targeted and suitable interactive advertisements can be pushed in time. Playing advertisements related to the consumer's behavior, habits and hobbies through the advertising display screen makes the consumer interested in the advertisement to a large extent and listens or stops to watch the advertisement, which enhances the investment effect of offline advertisements. The interactive advertisement is provided by the advertiser. The product involved in the played advertisement may be a product in the shopping mall/convenience store or be associated with a product in the shopping mall/convenience store. The product involved in the played advertisement may even completely irrelevant to the products in the shopping mall/convenience store. As long as the product is targeted to consumers, consumers will pay attention to the product to a large extent, thus achieving the offline advertising investment expectations. Of course, if the product involved in the played advertisement exists in the shopping mall/convenience store, the consumer's willingness to buy will increase. Further, the sales staff of the shopping mall/convenience store can also recommend related products to the consumer based on the specific information and potential consumption intention of the consumer, so that the purchase success rate of the consumer is greatly improved, and the profit of the shopping all/convenience store is increased.

The identity recognition device is a device for identifying consumers who come to the scene. Preferably, it may include a face recognition camera, which uses face recognition technology to capture the face of a consumer and perform recognition analysis on facial features, and send the recognized facial feature information of the consumer to the advertising index matching module for data matching. Preferably, it may also include a behavior detection device, which detects the MAC address information of the smart device carried by the consumer through a Wifi probe set on the site for consumer identification and sends it to the advertising index matching module for data matching. Of course, more preferably, the identity recognition device may include both a face recognition camera and a behavior detection device, the facial feature information of the consumer and the MAC address information of the smart device carried by the consumer, respectively recognized by the face recognition camera and the behavior detection device, are sent to the advertising index matching module as the consumer's identity information for matching. Using the facial recognition technology to capture the consumer's face and recognize and analyze the facial features is an identity recognition method that is realized through Face ID facial recognition, which is a very accurate recognition. As long as the consumer's Face ID exists in the fused data source, subsequent successful matching can be achieved through the advertising index matching module, that is, it is possible to know who the consumer is. If the Face IDs of all consumers have been collected in advance, they can be identified through Face ID facial recognition. For consumers whose Face ID has not been collected in the data source in advance, they cannot be authenticated through facial recognition, at this time, the MAC address needs to be used to supplement the identification. The use of MAC addresses expands the possibility of collection and integration of data sources, improves the consumer identification scheme, makes the scope of consumer identification more complete, and enhances the accuracy and effect of identification and offline advertising interaction.

The advertising index matching module performs data matching. Preferably, when the matching is successful, the advertising index matching module controls the offline advertising management platform to send precise advertisements. The precise advertisements refer to advertisements that can be matched with the labels in the advertisement index database and pushed according to the labels. When the matching is unsuccessful, the advertising index matching module controls the offline advertising management platform to send semi-precise advertisements. The semi-precise advertisement cannot match the precise label, and can only be pushed based on the basic identity information of the consumer, such as gender and age, recognized by the identity recognition device such as the face recognition camera, or simple labels of the detected consumer's simply behaviors in the temporary database. In this way, suitable advertisements are pushed to consumers, and the accuracy of the push is improved as much as possible, and the effect of interaction with consumers is enhanced.

Preferably, the behavior detection device in the identity recognition device further comprises a RF identification device installed on site. The RF identification device detects the consumer's movement pattern to identify the consumer's behavior characteristics, and attaches corresponding labels to identified consumer's behavior characteristics information, and puts the identified consumer's behavior characteristics information into a temporary database. The advertising index matching module first matches the identified consumer's identity information with the data in the advertising index database, and then matches with the data in the temporary database when the matching is unsuccessful. In other words, the data in the advertising index database is matched preferentially. If the matching is unsuccessful, that is, the precise label cannot be matched, the semi-precise advertisements are pushed based on based on the basic features of the consumer, such as gender and age, recognized by the identity recognition device such as the face recognition camera, and by further matching the simple labels of the consumer's simply behaviors in the temporary database detected by the RF identification device, to push suitable advertisements for consumers as much as possible. And the information obtained by consumer recognition this time, such as facial recognition information, the recognized MAC address information of the smart device carried, purchase information, and the behavioral characteristic information of the consumer with a label in the temporary database, etc., can be used as new data for the consumer to update the data source, so that next time the consumer comes to the scene, more accurate interactive advertisements will be pushed.

### Brief description of the drawings

Figure 1 is a schematic diagram of a structure of an offline interactive advertising system according to the present invention.
Figure 2 is a schematic diagram of a preferred structure of an offline interactive advertising system according to the present invention.
Figure 3 is a schematic diagram of a preferred system architecture of an offline interactive advertising system according to the present invention.

### Description of exemplary embodiments

The invention will now be described with reference to the accompanying drawings.

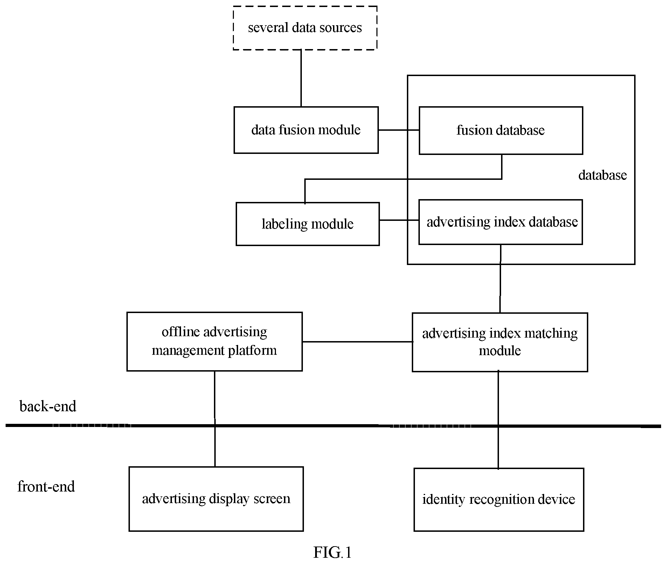

The present invention relates to an offline interactive advertising system, its structure diagram shown as in Figure 1, comprising a data fusion module, a labeling module, a database, an advertising index matching module and an offline advertising management platform all located in the back-end, as well as an identification device and an advertising display screen all located in the front-end. The database comprises a fusion database and an advertising index database. The data fusion module performs data fusion on several data sources of online data and/or offline data of each consumer and puts fused data into the fusion database. The labeling module attaches several corresponding labels to the fused data according to consumer behavior habits to generate consumer label data and put it into the advertising index database. The identity recognition device performs identity recognition on the consumer who arrives at the scene, and then sends the identified identity information of the consumer to the advertising index matching module. The advertising index matching module matches the identified identity information of the consumer with data in the advertising index database. According to the matching result, the offline advertising management platform pushes the corresponding advertisement and displays it on the advertisement display screen. The entire system integrates offline and online data and resources, so as to realize the linkage of several online and offline data sources, so that consumers' identity information can be identified by the identity recognition device. In addition, by pushing targeted advertisements related to the consumer's behavior, habits and hobbies for various consumers after the advertising index module matches the identity information with the label data of individual consumers in the advertising index database, the one-way disadvantage of offline advertisements in shopping malls/convenience stores could be completely overcome. Consumers can be identified in time. Targeted and suitable interactive advertisements can be pushed in time. The consumers could be made interested in the advertisement to a large extent and listens or stops to watch the advertisement. The investment effect of offline advertisements could be enhanced.

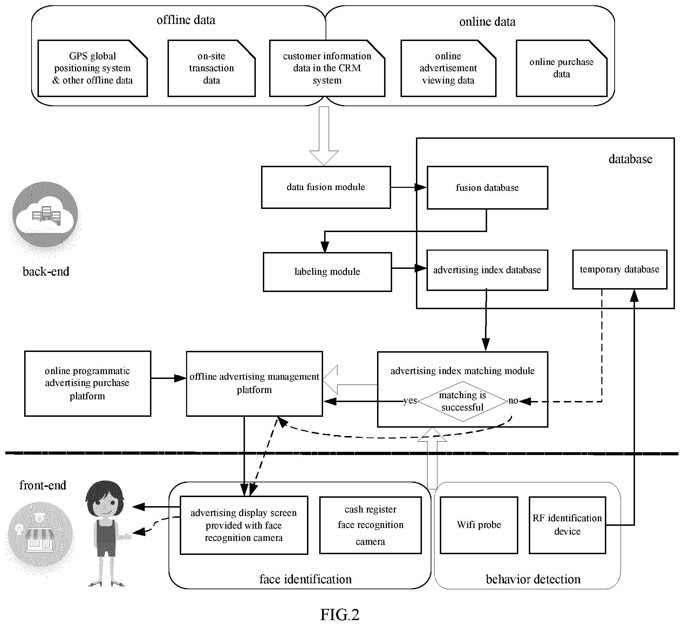

The schematic diagram of a preferred structure of an offline interactive advertising system according to the present invention is shown in FIG 2. The data sources for data fusion in the data fusion module can be several online data and offline data. In this embodiment, five types of data are preferably used. These data types can come from one or more data sources. The five data types are: GPS global positioning system & other offline data, on-site transaction data, customer information data in the CRM system, online advertisement viewing data, and online purchase data. Among them, GPS global positioning system & other offline data and on-site transaction data belong to offline data, online advertisement viewing data and online purchase data belong to online data, and customer information data in the CRM system comprises online data and offline data. Of course, the present invention is not limited to the above five data types. The above five data types are only for illustrative purposes. The present invention can use more or fewer data types. The data fusion module performs data fusion on the five types of data from several data sources for every consumer and puts fused data into the fusion database. Data fusion technology that standardizes the same data types from different data sources, comprises data processing steps such as data cleaning and data filtering. The data fusion module can re-integrate online and offline viewing and purchase data and link it to each consumer.

The labeling module attaches a number of corresponding labels to the fused data according to consumer behavior habits to generate consumer label data and put it into the advertising index database. The labels are behavior-specific labels that are calculated based on the characteristics of different data. The label corresponds to the advertiser's segmentation of target consumers. Different data types can be labeled with different behaviors. Various labels can be regard as existing in a label library. The label library can be set in the database. For example, through GPS global positioning system & other offline data, we can know where consumers have been and learn about their hobbies, so that we can attach geographical position labels, location labels, hobby labels, etc. Through on-site transaction data and online purchase data, it is possible to know what products consumers have purchased and the amount of consumption, etc., and purchase product labels, consumption capacity labels, etc. can be attached. Through online advertisement viewing data, it is possible to know what kind of advertisement consumers usually like to browse, and advertisement product labels, etc. can be attached. From the customer information data in the CRM system, further detailed information can also be obtained, such as detailed purchase information and on-site behavior habits of shopping malls and convenience stores. Purchase product labels, behavior habit labels, etc. can be attached. In this way, for each consumer, the corresponding fused data can be labeled with many labels. In other words, the consumer label data usually corresponds to a long list of labels. The expression of each label can be "yes or no" or "which type", for example, golf label (yes or no? frequency?), travel label (yes or no? where to go?), car advertising label (yes or no? number of views?). The advertising index database stores the fusion data for consumers after labeling, that is, consumer label data, or stores different label links for individual consumers.

The identity recognition device of the present invention is a device for performing identity recognition on consumers who come to the scene, which is installed on the scene of the shopping mall/convenience store. The identity recognition device may be a face recognition camera, or a behavior detection device such as a Wifi probe (or a Wifi sensor) for recognizing the MAC address of a smart device carried by the consumer. It is also possible to use a face recognition camera and a Wifi probe at the same time as shown in Figure 2. It should be noted that the site of the shopping mall/convenience store in the present invention may be the site of various retail stores such as a mall or a convenience store.

The face recognition camera is used to capture the consumer's face and recognize and analyze the facial features using face recognition technology, and send recognized facial feature information of the consumer to the advertising index matching module. The advertising index matching module matches the recognized facial feature information of the consumer with data in the advertising index database. According to the matching result, the offline advertising management platform pushes the corresponding advertisement and displays it on the advertising display screen. When the matching is successful, the advertising index matching module controls the offline advertising management platform to send precise advertisements. When the matching is unsuccessful, the advertising index matching module controls the offline advertising management platform to send semi-precise advertisements. The precise advertisements and semi-precision advertisements are linked based on various labels attached to consumers. The precise advertisement refers to a corresponding advertisement that is successfully matched to a precise label and pushed according to the precise label. The semi-precise advertisement is an advertisement that is pushed based on the simple labels such as gender, age, or simple behavior as determined by the face recognition camera when the precise label cannot be matched.

The behavior detection equipment comprises a Wi-Fi probe set on site. The Wifi probe detects the MAC address information of the smart device carried by the consumer for consumer identification, and sends it to the advertising index matching module for data matching. According to the matching result, the offline advertising management platform pushes the corresponding advertisement and displays it on the advertising display screen. When the matching is successful, the advertising index matching module controls the offline advertising management platform to send precise advertisements. When the matching is unsuccessful, the advertising index matching module controls the offline advertising management platform to send semi-precise advertisements. The Wifi probe is based on the standard protocol of IEEE802.11a/b/g/n. The Wifi probe detects the covered area in the form of sending and receiving broadcast frames to detect the MAC address information of the smart device carried by the consumer for consumer identification. This information has been desensitized and cannot correspond to all personal information in detail, and can only be linked through various labels attached. The precise advertisement refers to a corresponding advertisement that is successfully matched to a precise label and pushed according to the precise label. The semi-precision advertisement is an advertisement pushed according to simple labels based on simple behaviors detected by the Wifi probe when the precise label cannot be matched.

The identity recognition device in the preferred structure shown in FIG 2 comprises both a face recognition camera and a behavior detection device. The behavior detection device comprises a Wifi probe set on site. The face recognition camera uses face recognition technology to capture the consumer's face and perform recognition analysis on the facial features to obtain recognized facial feature information of the consumer. The Wifi probe detects the MAC address information of the smart device carried by the consumer. The recognized facial feature information of the consumer and the MAC address information of the smart device carried by the consumer are sent to the advertising index matching module as the identity information of the consumer for matching. The facial recognition technology used by the face recognition camera to capture the consumer's face and recognize and analyze the facial features is an identity recognition method that is realized through Face ID (Face Identification) facial recognition, which is a very accurate recognition. As long as the consumer's Face ID exists in the fused data source, subsequent successful matching can be achieved through the advertising index matching module, that is, it is possible to know who the consumer is. If the Face IDs of all consumers have been collected in advance, they can be identified through Face ID facial recognition. In practical applications, the data source may be data from a third party, that is, big data obtained through a third party. The data source can be network broadband data corresponding to the mobile device, such as telecommunication data, Netcom data, and so on. The third-party data is usually related data including a large number of MAC addresses. There is often no Face ID in this type of data. If the data source does not collect the Face ID in advance, the face recognition authentication cannot be completed. At this time, the MAC address of the mobile device is required to supplement the identification. That is, the identification is implemented based on the MAC address of the smart device carried by the consumer, such as the mobile phone device. As long as the consumers in the shopping mall/convenience store turn on the Wifi, the Wifi probe set on the spot can detect the MAC address (mobile phone device number) of their mobile device. This expands the possibilities of data source collection and integration. Consumers can be configured with two data sources, facial identification code and mobile phone device number, to complete the consumer identification scheme. Thus, the scope of its identification is more complete. The disadvantage of one-way blind broadcasting of traditional offline advertisements is eliminated. Facial recognition technology and Wi-Fi probe sensing technology are used to identify consumers in real time, or guess contours of consumers. In the case of successfully matching the precise label, the corresponding precise advertisement is pushed according to the precise label. In the case that precise labels cannot be matched, semi-precise advertisements can be pushed based on simple labels such as gender and age identified by the face recognition camera or simple behaviors identified by Wifi probe, so that suitable interactive advertisements can be pushed in time. This enhances the accuracy and effectiveness of identity recognition and offline advertising interactions.

Specifically, in order to capture the consumer's face from the front, the face recognition camera may be configured on the advertising display screen, or may be installed at the cash register on site, as shown in FIG 2. In this way, when a consumer enters the scene facing the advertising display screen or checks out at the cash register, the consumer's face can be captured frontally so as to realize identity recognition by means of face ID facial recognition. Further, when the consumer is far away from the face recognition camera, the face recognition camera can capture and track the consumer's movement patterns at a long distance and perform visual analysis on features other than the consumer's face. The result of the visual analysis can be sent to the CRM system to update the customer information data, thereby updating the data source.

In addition to Wifi probes, behavior detection devices can also comprise devices that use the Internet of Things located on-site to determine consumer movement patterns. As shown in Figure 2, the behavior detection device comprises a radio frequency (RF) identification device installed on site. At this time, the database comprises a fusion database, an advertising index database and a temporary database. The RF identification device detects the consumer's movement pattern to recognize the consumer's behavior characteristics, and attaches corresponding labels to the recognized consumer's behavior characteristic information, and then puts it into the temporary database. The advertising index matching module first matches the identified consumer's identity information with data in the advertising index database, and when the matching is unsuccessful, matches the identified consumer's identity information with data in the temporary database. As shown in Figure 2, the advertising index matching module provides a data stream drawn with a solid line when the data is successfully matched, at this time, the offline advertising management platform sends precise advertisements and displays them on the advertising display screen; the advertising index matching module provides a data stream drawn with a dotted line when the data matching is unsuccessful, at this time, the offline advertising management platform sends semi-precise advertisements and displays them on the advertising display screen. In other words, the data in the advertising index database is matched first. If the matching is unsuccessful, that is, the accurate label cannot be matched, only the basic features such as gender and age recognized by the identity recognition device (such as the face recognition camera) can be used. And the basic features can be further matched with simple labels of consumer behavior features detected by the RF identification device in the temporary database to push semi-precise advertisements, so as to push suitable advertisements for consumers as much as possible. And the information obtained by consumer recognition this time, such as facial recognition information, the recognized MAC address information of the smart device carried, purchase information, and the behavioral characteristic information of the consumer with a label in the temporary database, etc., can be used as new data for the consumer to update the data source, so that next time the consumer comes to the scene, more precise interactive advertisements will be pushed.

Furthermore, any number of normal cameras can also be provided in the shopping mall/convenience store. At this time, it can be considered that the behavior detection device also comprises a normal camera provided in the scene. The normal camera can remotely capture and track consumers' movement patterns, visually analyzes consumers' physical characteristics, and sends the visual analysis results to the CRM system to update customer information data, thereby updating the data source.

Further, the offline advertising management platform is a platform for managing and storing the offline advertisements. It pushes precise advertisements or semi-precise advertisements according to the data matching results of the advertising index matching module. It should be noted that when the data matching performed by the advertising index matching module is successful, a plurality of label links may be involved. That is, a plurality of precise advertisements meet pushing conditions. At this point, the offline advertising management platform can set priorities for precise advertising push. Similarly, when the data matching of the advertising index matching module is unsuccessful, a plurality of label links may also be involved. That is, a plurality of semi-precise advertisements meet the pushing conditions. At this time, the offline advertising management platform can also set priorities for semi-precise advertising push. The offline advertising management platform can be connected to an online programmatic advertising purchase platform. The offline advertisement management platform purchases advertisements from the online programmatic advertising purchase platform to push the advertisements. The offline advertising management platform can also manage the way the advertisement is played and the start and end time of the advertisement. For example, if the face recognition camera is configured on the advertising display screen, when the consumer approaches and faces the advertising display screen, through the consumer's facial recognition performed by the face recognition camera and a series of work of the back-end modules, the playing of precise or semi-precise advertisements on the advertising display screen is finally realized. Consumers may stop, or they may leave. The advertisement can continue to be played when the consumer leaves the advertising display screen, or can be stopped immediately or after a delay of a few seconds. If the consumer stays in front of the advertising display screen all the time, suitable advertisements can be played one by one according to the preset priority. If there are more than two consumers in front of the advertising display screen that can be face-recognized at the same time, after receiving the matching result of the advertising index matching module for the relevant data of each identified consumer, the offline advertising management platform can obtain several advertisements suitable for the identified consumers. At this time, the priority can be preset and the advertisement will be played in the order of priority. Furthermore, the advertising display screen is preferably a digital display device supporting interactive advertising. In this case, consumers can directly touch the digital buttons on the advertising display screen to control the pause, fast forward, next one, etc. of advertising, so as to achieve real-time interaction between consumers and advertising content. In this way, consumers can directly watch the advertisements that they are more interested in, which further enhances the investment effect and interactive effect of offline advertising.

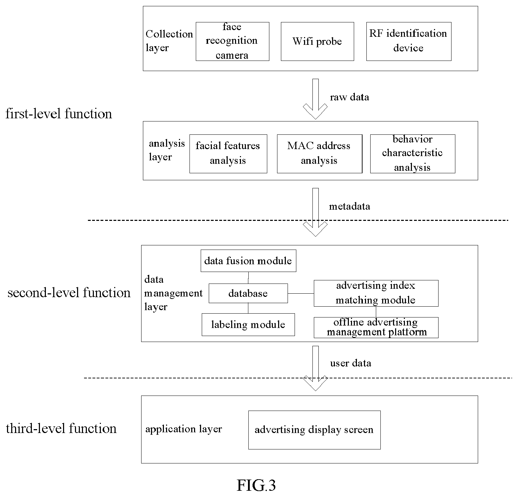

In order to introduce the offline interactive advertising system of the present invention in more detail, the present invention will be further explained at system architecture level below. The requirements faced by the system of the present invention are: when a consumer enters a shopping mall/convenience store, the system can recognize the identity of the consumer; according to the consumer's historical behavior and habits information, the system can play product advertisements that the consumer is interested in; the system can further remind the sales staff that consumers have potential intention to buy the product. In order to achieve the above requirements, it is preferable to build a three-level and four-layer system architecture. As shown in Figure 3, the system architecture comprises three functional levels and four logical layers. Specifically, the system architecture sequentially comprises four layers: collection layer, analysis layer, data management layer, and application layer. Among them, the collection layer and analysis layer belong to the first-level function, the data management layer belongs to the second-level function, and the application layer belongs to the third-level function.

The first-level function (data collection layer and analysis layer) is implemented in each shopping mall/convenience store. By capturing user's image, the facial feature information and expressions as well as the user's behavior are analyzed, and then this information is sent to the data center of the second-level function of the system to query the detailed information of the customer. Specifically, the collection layer uses the identity recognition device to identify the consumers who come to the scene, and collect their identity information and transfer the information to the analysis layer as raw data for feature analysis. As an identity recognition device, it is preferable to provide a face recognition camera, a Wifi probe, and a RF identification device for behavior detection, or even a normal camera. Among them, the face recognition camera uses facial recognition technology to capture consumer's facial features; the Wifi probe detects the MAC address information of smart devices carried by consumers; the RF identification device detects consumers' movement patterns; the face recognition camera and the normal camera can both capture and track consumer movement patterns at a long distance. The raw data refers to data directly captured or obtained by these identification devices without any processing, and transmitted to the analysis layer in the form of a video stream for feature analysis processing. It should be particularly noted that the face recognition camera introduced in the foregoing description of the preferred embodiment shown in FIG 2 of the present invention can be understood as an integrated device with collection and analysis functions. For example, the integrated device is equipped with a face recognition camera collector and an intelligent data analyzer. The face recognition camera collector captures the facial features and expressions of consumers. The intelligent data analyzer recognizes and analyzes the facial features and expressions of consumers in the images returned by the face recognition camera collector.

The analysis layer receives the raw data transmitted from the collection layer, and analyzes the data through the identity recognition device with analysis function, extracts or determines and forms specific types of metadata from the raw data in the form of video streams (that is, attaches specific attribute parameters to the raw data), and transmits it to the advertising index matching module of the data management layer for subsequent data matching. Among them, the face recognition camera performs facial feature analysis on the raw data, extracts consumer's facial feature information from the video stream, obtains metadata with facial feature attributes and transmits the facial feature information metadata to the advertising index matching module of the data management layer. The Wifi probe performs identity recognition analysis on the raw data of the MAC address of the detected smart device carried by the consumer, obtains metadata with identity attributes, and sends the identity information metadata to the advertising index matching module. The RF identification device performs the behavior feature analysis on the raw data, determines the behavior features of consumers based on the video stream information, obtains metadata with the behavior feature attributes, and transmits the behavior feature information metadata to the advertising index matching module of the data management layer. For example, through the consumer's "hanging out" behavior information in the video stream information, specific behavioral information such as consumers staying at the on-site skin care product counter, picking up a bag product, and purchasing a facial mask are obtained, that is, the metadata with feature attributes are obtained.

The second-level function is completed in the back-end data center (data management layer). All shopping malls/convenience stores need to send the data processed by the first-level functions to the data center for query. After receiving the query information, by comparing with the consumer's label data information in the database, the data center returns the specific information of corresponding consumer and recommended advertising strategies. Another function of the data center is to integrate customer data from different sources (such as different convenience store systems, or different online and offline information). Specifically, the data center may comprise a data fusion module, a database, a labeling module, an advertising index matching module and an offline advertising management platform. The data fusion module fuses a variety of different data sources comprising online and offline data of consumers. By using data fusion technology to normalize the data of the above-mentioned different data sources, data cleaning and data filtering can even be performed. The fused data is stored in the database. The labeling module attaches several corresponding labels to the fused data to generate consumer label data. Specifically, the labeling may be carried out according to the age, gender, purchasing habits, preferences and other aspects of consumers. The label can be a precise label or a simple label attached based on simple information. The advertising index matching module receives the metadata with feature attributes transmitted by the analysis layer of the first-level function, compares it with the consumer's label data in the database, and controls the offline advertising management platform to generate a suggestive advertisement push list according to the matching results. Specifically, when the matching is successful, the advertising index matching module controls the offline advertising management platform to generate a push list of precise advertisements (advertisements that fully comply with consumers' precise labels). When the matching is unsuccessful, that is, there is no consumer information with precise label in the database, the advertising index matching module controls the offline advertising management platform to generate semi-precise advertisements (partially comply with consumer's feature attributes) push list. The offline advertisement management platform uses the generated push list to control the advertising display screen of the application layer to play suitable advertisements. The entire data management layer, especially the part of the database, usually needs to be deployed on a public cloud platform or a private cloud platform so that all convenience store and shopping malls can access it to save data space, enhance the efficiency of data resource utilization, and improve advertising effectiveness.

The third-level function is implemented in each shopping mall/convenience store (application layer). After the current consumer's specific information and recommended advertising strategies are returned from the data center, the advertisements will be played through the advertising display screens according to the corresponding strategies. If the shopping mall/convenience store has related advertising products, the sales staff will recommend the relevant products to the customer based on the specific information of the consumer and potential consumption intentions. Therefore, the application layer is essentially the advertising display layer. In other words, the application layer accepts the control of the offline advertising management platform of the data management layer, and uses the advertising display screen to push suitable advertisements to each consumer. When the matching result of the data management layer is successful, the advertisement display screen receives the precise advertisement push list generated by the offline advertisement management platform and pushes the advertisement to the consumer. For example, advertisements related to basketball equipment are pushed to young men who like basketball. When the matching result of the data management layer is unsuccessful, the advertisement playing device receives the semi-precise advertisement push list generated by the offline advertising management platform and pushes the advertisement to the consumer. For example, related advertisements for skin care products are pushed to female consumers around 20-30 years old. Or semi-precise advertisements are pushed based on the simple behavior of consumers to attract consumers' interest to a greater extent, enhance the effect of advertising, and promote the purchase transaction rate. Further, the pushed advertisement may be an advertisement of a corresponding product sold in the convenience store or shopping mall, or an advertisement of other online products. This can increase the transaction volume of the advertisement product in many ways and enhance the advertisement effect. Moreover, even if the consumers do not watch advertisements, shopping guides can provide precise or semi-precise purchase guidance and recommendations to consumers based on existing consumer's feature data, etc. This can greatly facilitate effective orders.

Further, the collection layer can also collect information through an infrared scanner, a POS scanner, etc. And the collection layer can transmit the acquired raw data information to the analysis layer in the form of a video stream. The infrared scanner can scan and identify the identity information. The POS scanner can scan the customized bar codes of customer members and the like.

Further, in addition to the above-mentioned integrated structure that combines the two functions of information collection and information analysis, the identity recognition device can also adopt two or more devices with independent information collection functions and independent information analysis functions. The independent information collection device performs identity recognition and raw data collection, and transmits it to the independent information analysis device for analysis to obtain metadata with attribute parameters.

Further, in addition to the analysis of facial features, identity recognition, and behavior features on the raw data, the analysis layer can also perform expression analysis on the raw data. That is, the facial expression features of consumers are analyzed and tracked. For example, when the consumer sees a product with a clear expression of joy, such as "laughing", and it can basically be determined that the consumer has a certain interest in the product. It can be attached to metadata as a feature attribute to facilitate labeling of the product and enrich consumer label data in the database.

Further, the advertising display screen may also be other advertisement playing devices, such as TV screens, advertisement playing APPs of smart devices (such as mobile phones), and the like. They are under the control of the offline advertising management platform, and according to the advertising push list generated by the offline management platform, they push suitable advertisements to consumers, thereby enhancing the interaction between consumers and advertisements and improving the effect of advertising.

It should be noted that the above-described embodiments may enable those skilled in the art to more fully understand the present invention, but do not limit the invention in any way. Accordingly, the present invention has been described in detail with reference to the accompanying drawings and embodiments, and those skilled in the art will understand that the invention may be modified or substituted. In short, all technical solutions and improvements thereof that do not depart from the spirit and scope of the present invention should be covered by the scope of protection of the invention.

## Claims

1. An offline interactive advertising system, comprising a data fusion module, a labeling module, a database, an advertising index matching module and an offline advertising management platform all located in a back-end, as well as an identity recognition device and an advertising display screen all located in a front-end, the database comprises a fusion database and an advertising index database;
the data fusion module performs data fusion on several data sources of online data and/or offline data of each consumer and puts fused data into the fusion database, the labeling module attaches several corresponding labels to the fused data according to consumer behavior habits to generate consumer label data and put it into the advertising index database, the identity recognition device performs identity recognition on the consumer who arrives at scene, and then sends identified identity information of the consumer to the advertising index matching module, the advertising index matching module matches the identified identity information of the consumer with data in the advertising index database, according to matching result, the offline advertising management platform pushes corresponding advertisement and displays it on the advertisement display screen.

2. The offline interactive advertising system according to claim 1, wherein the identity recognition device comprises a face recognition camera, and the data sources fused by the data fusion module comprises customer information data in a CRM system; the face recognition camera uses face recognition technology to capture the consumer's face and perform recognition analysis on facial features, and sends recognized facial feature information of the consumer to the advertising index matching module, the advertising index matching module matches the recognized facial feature information of the consumer with data in the advertising index database.

3. The offline interactive advertising system according to claim 1, wherein the identity recognition device comprises a behavior detection device, and the behavior detection device comprises a Wifi probe set on site, the Wifi probe detects MAC address information of a smart device carried by the consumer to identify the consumer's identity information and sends the identity information to the advertising index matching module for data matching.

4. The offline interactive advertising system according to claim 1, wherein the identity recognition device comprises a face recognition camera and a behavior detection device, the behavior detection device comprises a Wifi probe set on site, and the data sources fused by the data fusion module comprises customer information data in a CRM system; the face recognition camera uses face recognition technology to capture the consumer's face and perform recognition analysis on facial features to obtain recognized facial feature information of the consumer, the Wifi probe detects MAC address information of a smart device carried by the consumer, the recognized facial feature information of the consumer and the MAC address information of the smart device carried by the consumer are both sent to the advertising index matching module as the identity information of the consumer for data matching.

5. The offline interactive advertising system according to any of claim 1 to 4, wherein the advertising index matching module controls the offline advertising management platform to send precision advertisements when the matching is successful, and controls the offline advertising management platform to send semi-precision advertisements when the matching is unsuccessful.

6. The offline interactive advertising system according to claim 2 or 4, wherein the face recognition camera remotely captures and tracks the consumer's movement pattern, and performs visual analysis on features other than the consumer's face, and sends the visual analysis result to the CRM system to update the customer information data, thereby updating the data sources.

7. The offline interactive advertising system according to claim 3 or 4, wherein the behavior detection device also comprises a radio frequency identification device set on site, the database also comprises a temporary database, the data sources fused by the data fusion module comprises customer information data in a CRM system; the radio frequency identification device detects the consumer's movement pattern to recognize the consumer's behavior characteristics, and attaches corresponding labels to recognized consumer's behavior characteristic information, and then puts it into the temporary database, the advertising index matching module first matches the identified consumer's identity information with data in the advertising index database, and when the matching is unsuccessful, matches the identified consumer's identity information with data in the temporary database; the consumer's identity information identified by the identity recognition device and the consumer's behavior characteristic information with labels in the temporary database are both sent to the CRM system to update the customer information data for updating the data sources.

8. The offline interactive advertising system according to claim 3 or 4, wherein the behavior detection device comprises a normal camera set on site, the data sources fused by the data fusion module comprises customer information data in the CRM system; the normal camera remotely captures and tracks the consumer's movement pattern, and performs visual analysis on the consumer's physical characteristics, and sends the visual analysis result to the CRM system to update the customer information data, thereby updating the data sources.

9. The offline interactive advertising system according to claim 2 or 4, wherein the face recognition camera is installed on the advertising display screen or at a cash register on site to capture the consumer's face from the front.

10. The offline interactive advertising system according to claim 5, wherein the online data of consumers in the data sources comprises online advertisement viewing data, online purchase data, and online customer information data in the CRM system; the offline data of the consumers comprises GPS offline data, on-site transaction data and offline customer information data in the CRM system.
